# EUROPEAN PATENT APPLICATION

(11) **EP 4 178 172 A1**
(43) Date of publication of application: **10.05.2023**
(21) Application number: 21850562.6
(22) Date of filing: 13.04.2021
(51) Int. Cl.: H04L 61/00

(54) **ENTRY INFORMATION PROCESSING METHOD AND DEVICE**

(30) Priority: 25.07.2020 CN 202010726603; 27.10.2020 CN 202011165160
(71) Applicant: Huawei Technologies Co., Ltd., Longgang District, Shenzhen, Guangdong 518129 (CN)
(72) Inventor: ZHU, Yun, Shenzhen, Guangdong 518129 (CN); ZHANG, Yaokun, Shenzhen, Guangdong 518129 (CN); CHEN, Liang, Shenzhen, Guangdong 518129 (CN)
(74) Representative: MERH-IP Matias Erny Reichl Hoffmann Patentanwälte PartG mbB
(86) International application number: PCT/CN2021/086852
(87) International publication number: WO 2022/021939

(57) **Abstract**

This application provides a method for processing DHCP snooping entry information in a ring network, and the method is performed by a first communication apparatus that is in the ring network. In an example, the first communication apparatus may obtain the DHCP snooping entry information and synchronize the DHCP snooping entry information to the ring network or one or more other nodes communicating with the ring network. The DHCP snooping entry information includes a first internet protocol IP address of first user equipment and a first MAC address of the first user equipment. The first user equipment accesses the ring network via the first communication apparatus. By using this solution, after a packet transmission path changes, DHCP snooping can be performed on a node on a new path based on the obtained DHCP snooping entry information, so as to ensure that an authorized user can access a network and to effectively prevent a network attack.

## Description

This application claims priorities to the following Chinese Patent Applications, filed with the China National Intellectual Property Administration, which are incorporated herein by reference in their entireties.
1. Chinese Patent Application No. 202010726603.5, filed with the China National Intellectual Property Administration on July 25, 2020 and entitled "COMMUNICATION METHOD AND DEVICE"; and
2. Chinese Patent Application No. 202011165160.3, filed with the China National Intellectual Property Administration on October 27, 2020 and entitled "ENTRY INFORMATION PROCESSING METHOD AND APPARATUS".

### TECHNICAL FIELD

This application relates to the communications field, and in particular, to a dynamic host configuration protocol (Dynamic Host Configuration Protocol, DHCP) snooping (snooping) entry information processing method and an apparatus.

### BACKGROUND

A DHCP server (server) may dynamically assign an internet protocol (Internet Protocol, IP) address to a DHCP client (client). However, when the DHCP server assigns the IP address to the DHCP client, there may be security risks, for example, a man-in-the-middle attack, an IP spoofing (spoofing) attack, a media access control (media access control, MAC) spoofing attack, a DHCP exhaustion attack, and a starvation attack. The DHCP client may also be referred to as user equipment.

To reduce security risks, a DHCP snooping function may be configured on a network device. In DHCP snooping, a correspondence between an IP address and a MAC address that are of the DHCP client is recorded, to ensure that an authorized user can access a network. Through DHCP snooping, problems such as the DHCP exhaustion attack and an invalid IP packet attack that occur when the device applies DHCP can also be resolved. However, in some ring network scenarios, even if the DHCP snooping function is deployed on the network device, network security of a ring network still cannot be effectively ensured.

### SUMMARY

This application provides an entry information processing method, to further improve network security.

According to a first aspect, an embodiment of this application provides an entry information processing method. The method may be performed by a first communication apparatus that is in a ring network. In an example, the first communication apparatus may obtain DHCP snooping entry information corresponding to first user equipment and synchronize the DHCP snooping entry information to the ring network or an apparatus, different from the ring network, that communicates with the ring network. Therefore, after a transmission path used to transmit a packet sent by the first user equipment changes, a network apparatus on a new forwarding path can obtain the DHCP snooping entry information corresponding to the first user equipment, so that DHCP snooping is performed on the apparatus. Specifically, the DHCP snooping entry information corresponding to the first user equipment includes a first internet protocol (Internet Protocol, IP) address of the first user equipment and a first media access control (media access control, MAC) address of the first user equipment. After obtaining the DHCP snooping entry information, the first communication apparatus may generate a first packet, where the first packet includes the DHCP snooping entry information. Then, the first communication apparatus may send the first packet. The first user equipment accesses the ring network via the first communication apparatus. By using this solution, a communication apparatus that receives the first packet can obtain the DHCP snooping entry information, so that the DHCP snooping entry information may be further added to the device, to ensure that an authorized user can access a network and to effectively prevent a network attack. In an example, the first user equipment accesses the ring network via the first communication apparatus, and transmits a packet on a second path in the ring network. When a network topology of the ring network changes, and the first communication apparatus forwards, on a first path in the ring network, the packet sent by the first user equipment, the first communication apparatus may synchronize the DHCP snooping entry information of the first user equipment to a communication apparatus on the first path according to the solution of this application. In this way, DHCP snooping can be enabled in the ring network to ensure a normal service of an authorized user, effectively reduce an attack on the ring network, and improve network security of the ring network.

In an implementation, after the network topology of the ring network changes, the first communication apparatus may perform the foregoing step of obtaining the DHCP snooping entry information and subsequent steps. In this manner, before obtaining the first packet, the first communication apparatus may further determine that the topology of the ring network changes. In this case, the first communication apparatus may send the DHCP snooping entry information to another communication apparatus after the network topology of the ring network changes, so that the communication apparatus that receives the first packet obtains the DHCP snooping entry information, and a DHCP snooping function may be deployed in the device, to ensure that the authorized user can access the network and to effectively prevent the network attack.

In an implementation, in addition to the first IP address of the first user equipment and the MAC address of the first user equipment, the DHCP snooping entry information may further include: an identifier of a virtual local area network VLAN to which the first user equipment belongs, and/or lease time of the first IP address.

In an implementation, the first user equipment may transmit the packet on the second path in the ring network. When the network topology of the ring network changes, the first communication apparatus performs switching from the second path on which the packet is transmitted to the first path for forwarding the packet. The first path and the second path are two paths in opposite transmission directions in the ring network. In this case, the first communication apparatus may send the first packet to a communication node that is on the first path. In this way, DHCP snooping can be enabled in the ring network to ensure the normal service of the authorized user, effectively reduce the attack on the ring network, and improve the network security of the ring network.

In an implementation, considering that for the ring network, a root bridge node of the ring network is a node that is of the ring network and that interacts with an external network, and a packet forwarded to the external network via the ring network needs to be forwarded via the root bridge node. After the network topology of the ring network changes, a forwarding path of a packet sent by user equipment in the ring network changes. Therefore, a port that is of the root bridge node and that receives the packet also changes. In an example, the communication node that is on the first path may be the root bridge node of the ring network on the first path. In this case, even if the network topology of the ring network changes, the root bridge node may also check, based on the DHCP snooping entry information, the packet forwarded on the first path, to reduce network attacks and ensure network security.

In an implementation, the first communication apparatus may send the first packet to a primary node in a virtual router redundancy protocol VRRP group in an external network, and a root bridge node of the ring network accesses the external network via the VRRP group. In this way, the primary node can check a to-be-forwarded packet based on the DHCP snooping entry information, to avoid a network attack. In an example, the primary node may be, for example, a node that is upgraded from a secondary node to a primary node. In this case, as long as the VRRP group completes primary/secondary switchover, the new primary node may also obtain the DHCP snooping entry information, and check the to-be-forwarded packet, to avoid the network attack.

In an implementation, the first packet is a broadcast packet. In an example, the broadcast packet may be broadcast to each communication node that is on the first path, so that each communication node that is on the first path can obtain the DHCP snooping entry information based on the broadcast packet, and check the to-be-forwarded packet based on the DHCP snooping entry information, to effectively avoid the attack on the ring network.

In an implementation, the first packet is a unicast packet. In an example, the first communication apparatus may send the unicast packet to the root bridge node of the ring network. In another example, the first communication apparatus may send the unicast packet to the primary node in the VRRP group. In still another example, the first communication apparatus sends a unicast packet to each communication node that is on the first path. The communication apparatus that receives the first packet can obtain the DHCP snooping entry information, so that the DHCP snooping function can be deployed in the device, to ensure that the authorized user can access the network and to effectively prevent the network attack.

In an implementation, the first communication apparatus may generate the first packet based on a second packet, and send the first packet. In an example, the first communication apparatus may receive the second packet, where the second packet is used to request the DHCP snooping entry information from the first communication apparatus. After receiving the second packet, the first communication apparatus may generate the first packet and send the first packet. In this way, the communication apparatus that receives the first packet can obtain the DHCP snooping entry information, so that the DHCP snooping function can be deployed in the device, to ensure that the authorized user can access the network and to effectively prevent the network attack.

In an implementation, the second packet may be sent by the root bridge node of the ring network to the first communication apparatus. In this case, the first communication apparatus may send the first packet to the root bridge node of the ring network.

In an implementation, the second packet may be sent by the primary node in the VRRP group in the external network to the first communication apparatus, where the root bridge node of the ring network accesses the external network via the VRRP group. In this case, the first communication apparatus may send the first packet to the primary node in the VRRP group.

In an implementation, the first packet further includes indication information, and the indication information indicates the communication node that forwards the first packet and that is in the ring network to obtain the DHCP snooping entry information. In this case, the communication node that forwards the first packet and that is in the ring network can obtain the DHCP snooping entry information, so that the DHCP snooping function can be deployed in the device, to ensure that the authorized user can access the network and to effectively prevent the network attack.

In an implementation, the first packet may include a first part and a second part, where the first part is used to carry at least one piece of DHCP snooping entry information that includes the DHCP snooping entry information, and the second part is to indicate a quantity of pieces of DHCP snooping entry information carried in the first part.

In an implementation, the ring network is a layer 2 ring network or a layer 3 ring network. When the ring network is a layer 2 ring network, this solution can effectively prevent an attack on the layer 2 ring network. When the ring network is a layer 3 ring network, this solution can effectively prevent an attack on the layer 3 ring network.

According to a second aspect, this application provides an entry information processing method. The method may be performed by a second communication apparatus. In an example, the second communication apparatus may receive a first packet sent by a first communication apparatus that is in a ring network. The first packet includes dynamic host configuration protocol DHCP snooping entry information, and the DHCP snooping entry information includes a first internet protocol IP address of first user equipment and a first media access control MAC address of the first user equipment. The first user equipment accesses the ring network via the first communication apparatus. After receiving the first packet, the second communication apparatus may store the DHCP snooping entry information. In this way, the second communication apparatus can use the DHCP snooping entry information to ensure that an authorized user can access a network and to effectively prevent a network attack.

In an implementation, the DHCP snooping entry information further includes: an identifier of a virtual local area network VLAN to which the first user equipment belongs, and/or lease time of the first IP address.

In an implementation, the second communication apparatus is a communication node on a first path in the ring network, the first path is used to transmit a packet from the first user equipment when a second path in the ring network is faulty, and the first path and the second path are two paths in opposite transmission directions in the ring network.

In an implementation, the second communication apparatus includes a root bridge node of the ring network.

In an implementation, the second communication apparatus is a primary node in a virtual router redundancy protocol VRRP group in an external network, and the root bridge node of the ring network accesses the external network via the VRRP group.

In an implementation, the first packet is a broadcast packet.

In an implementation, the first packet is a unicast packet.

In an implementation, the method further includes: sending a second packet to the first communication apparatus, where the second packet is used to request the DHCP snooping entry information from the first communication apparatus.

In an implementation, the first packet further includes indication information, and the indication information indicates the second communication apparatus to obtain the DHCP snooping entry information.

In an implementation, the first packet includes: a first part, used to carry at least one piece of DHCP snooping entry information that includes the DHCP snooping entry information; and a second part, to indicate a quantity of pieces of DHCP snooping entry information carried in the first part.

In an implementation, the ring network is a layer 2 ring network or a layer 3 ring network.

In an implementation, during specific implementation of storing the DHCP snooping entry information, the second communication apparatus may store a correspondence between a port receiving the first packet and the DHCP snooping entry information.

According to a third aspect, this application provides an entry information processing method. The method may be performed by a second communication apparatus. In an example, the second communication apparatus may generate a second packet, and send the second packet to a first communication apparatus. The second packet is used to request dynamic host configuration protocol DHCP snooping entry information from the first communication apparatus that is in a ring network, the DHCP snooping entry information includes a first internet protocol IP address of first user equipment and a first media access control MAC address of the first user equipment, and the first user equipment accesses the ring network via the first communication apparatus. It can be seen that, by using this solution, the second communication apparatus may request the DHCP snooping entry information from the first communication apparatus, so as to check a to-be-forwarded packet by using the DHCP snooping entry information, to effectively prevent a network attack.

In an implementation, the method includes: receiving a first packet sent by the first communication apparatus, where the first packet includes the DHCP snooping entry information; and storing the DHCP snooping entry information.

In an implementation, in this application, the storing the DHCP snooping entry information includes: generating a DHCP snooping table, and storing the DHCP snooping entry information in the DHCP snooping table. In another implementation, the storing the DHCP snooping entry information includes storing the DHCP snooping entry information in a locally existing DHCP snooping table.

In an implementation, the DHCP snooping entry information further includes: an identifier of a virtual local area network VLAN to which the first user equipment belongs, and/or lease time of the first IP address.

In an implementation, the second communication apparatus is a communication node on a first path in the ring network, the first path is used to transmit a packet from the first user equipment when a second path in the ring network is faulty, and the first path and the second path are two paths in opposite transmission directions in the ring network.

In an implementation, the second communication apparatus includes a root bridge node of the ring network.

In an implementation, the second communication apparatus is a primary node in a virtual router redundancy protocol VRRP group in an external network, and the root bridge node of the ring network accesses the external network via the VRRP group.

In an implementation, the first packet is a broadcast packet.

In an implementation, the first packet is a unicast packet.

In an implementation, the first packet further includes indication information, and the indication information indicates the second communication apparatus to obtain the DHCP snooping entry information.

In an implementation, the first packet includes: a first part, used to carry at least one piece of DHCP snooping entry information that includes the DHCP snooping entry information; and a second part, to indicate a quantity of pieces of DHCP snooping entry information carried in the first part.

In an implementation, the ring network is a layer 2 ring network or a layer 3 ring network.

In an implementation, the storing the DHCP snooping entry information includes: storing a correspondence between a port receiving the first packet and the DHCP snooping entry information.

According to a fourth aspect, this application provides a first communication apparatus, including a transceiver unit and a processing unit. The transceiver unit is configured to perform receiving and sending operations performed by the first communication apparatus any one of the first aspect and the implementations of the first aspect. The processing unit is configured to perform an operation performed by the first communication apparatus other than the receiving and sending operations according to any one of the first aspect and the implementations of the first aspect.

According to a fifth aspect, this application provides a first communication apparatus. The first communication apparatus includes a memory and a processor. The memory is configured to store program code. The processor is configured to run instructions in the program code, to enable the first communication apparatus to perform the method according to any one of the first aspect and the implementations of the first aspect.

According to a sixth aspect, this application provides a first communication apparatus. The first communication apparatus includes a communication interface and a processor, the communication interface is configured to perform receiving and sending operations performed by the first communication apparatus according to any one of the first aspect and the implementations of the first aspect, and the processor is configured to perform an operation performed by the first communication apparatus other than the receiving and sending operations according to any one of the first aspect and the implementations of the first aspect.

According to a seventh aspect, this application provides a second communication apparatus, including a transceiver unit and a processing unit. The transceiver unit is configured to perform receiving and sending operations performed by the second communication apparatus according to any one of the second aspect and the implementations of the second aspect, and the processing unit is configured to perform an operation performed by the second communication apparatus other than the receiving and sending operations according to any one of the second aspect and the implementations of the second aspect. Alternatively, the transceiver unit is configured to perform receiving and sending operations performed by the second communication apparatus according to any one of the third aspect and the implementations of the third aspect, and the processing unit is configured to perform an operation performed by the second communication apparatus other than the receiving and sending operations according to any one of the third aspect and the implementations of the third aspect.

According to an eighth aspect, this application provides a second communication apparatus. The second communication apparatus includes a memory and a processor, the memory is configured to store program code, and the processor is configured to run instructions in the program code, to enable the second communication apparatus to perform the method according to any one of the second aspect and the implementations of the second aspect, or enable the second communication apparatus to perform the method according to any one of the third aspect and the implementations of the third aspect.

According to a ninth aspect, this application provides a second communication apparatus. The second communication apparatus includes a plurality of communication interfaces and at least one processor, the plurality of communication interfaces are configured to perform receiving and sending operations performed by the second communication apparatus according to any one of the second aspect and the implementations of the second aspect, and the at least one processor is configured to perform an operation performed by the second communication apparatus other than the receiving and sending operations according to any one of the second aspect and the implementations of the second aspect. Alternatively, the plurality of communication interfaces are configured to perform receiving and sending operations performed by the second communication apparatus according to any one of the third aspect and the implementations of the third aspect, and the at least one processor is configured to perform an operation performed by the second communication apparatus other than the receiving and sending operations according to any one of the third aspect and the implementations of the third aspect.

According to a tenth aspect, this application provides a computer-readable storage medium. The computer-readable storage medium stores instructions. When the instructions are run on a computer, the computer is enabled to perform the method according to any one of the first aspect and the implementations of the first aspect, or the computer is enabled to perform the method according to any one of the second aspect and the implementations of the second aspect, or the computer is enabled to perform the method according to any one of the third aspect and the implementations of the third aspect.

According to an eleventh aspect, this application provides a communication system. The communication system includes the first communication apparatus according to the fourth aspect, the fifth aspect, or the sixth aspect, and the second communication apparatus according to the seventh aspect, the eighth aspect, or the ninth aspect.

### BRIEF DESCRIPTION OF DRAWINGS

To describe the technical solutions in embodiments of this application or in a conventional technology more clearly, the following briefly describes the accompanying drawings used to describe embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of an example application scenario according to an embodiment of this application;
FIG. 2 is a schematic diagram of another example application scenario according to an embodiment of this application;
FIG. 3 is a signaling exchange diagram of an entry information processing method according to an embodiment of this application;
FIG. 4a is a schematic diagram of a structure of a packet 1 according to an embodiment of this application;
FIG. 4b is a schematic diagram of a structure of a packet 2 according to an embodiment of this application;
FIG. 5 is a schematic flowchart of an entry information processing method according to an embodiment of this application;
FIG. 6 is a schematic flowchart of an entry information processing method according to an embodiment of this application;
FIG. 7 is a schematic flowchart of an entry information processing method according to an embodiment of this application;
FIG. 8 is a schematic diagram of a structure of a communication apparatus according to an embodiment of this application;
FIG. 9 is a schematic diagram of a structure of a communication apparatus according to an embodiment of this application; and
FIG. 10 is a schematic diagram of a structure of a communication apparatus according to an embodiment of this application.

### DESCRIPTION OF EMBODIMENTS

Embodiments of this application provide an entry information processing method, to improve network security.

For ease of understanding, possible application scenarios of embodiments of this application are first described.

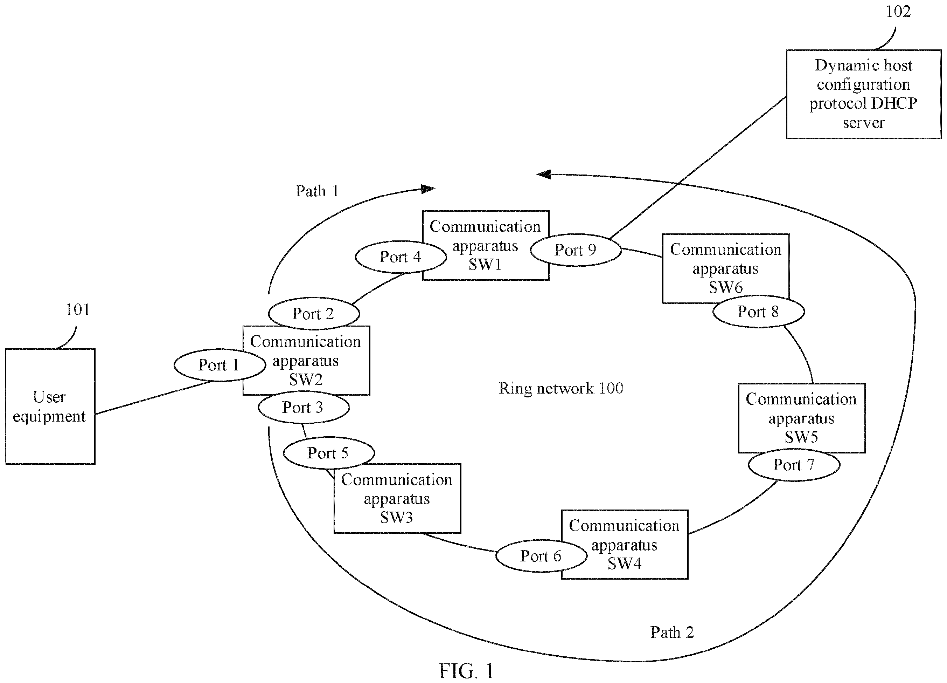

FIG. 1 is a schematic diagram of an example application scenario according to an embodiment of this application.

In the scenario shown in FIG. 1, user equipment 101 accesses a ring network 100 via a communication apparatus SW2, and communicates with a DHCP server 102 via the ring network 100. The ring network 100 in embodiments of this application may be a layer 2 (layer 2, L2) ring network, or may be a layer 3 (layer 3, L3) ring network. This is not limited in embodiments of this application.

As shown in FIG. 1, the ring network 100 includes communication apparatuses SW1, SW2, SW3, SW4, SW5, and SW6. To ensure communication security between the user equipment 101 and the DHCP server 102, a DHCP snooping function may be deployed on each communication apparatus in the ring network 100. In an example, the DHCP snooping function may be deployed on a user-side port of the communication apparatus SW2. The communication apparatus SW2 can store a DHCP snooping table. The DHCP snooping table may include information about a port on which the DHCP snooping function is deployed and DHCP snooping entry information corresponding to the port on which the DHCP snooping function is deployed. In this application, the DHCP snooping table may also be referred to as a DHCP snooping binding (binding) table.

In this application, the DHCP snooping entry information includes information about at least one piece of user equipment, and indicates that a packet from authorized user equipment can be forwarded through the port. The information about the user equipment includes an IP address and a MAC address that are of a user. The information about the user equipment may further include lease time of the IP address, and/or an identifier of a virtual local area network (virtual local area network, VLAN) to which the user equipment 101 belongs. For example, in the scenario shown in FIG. 1, the DHCP snooping function is deployed on a port 1, and a DHCP snooping entry stored in the communication apparatus SW2 may include information about the user equipment 101. Further, the DHCP snooping entry may include a correspondence between the information about the user equipment 101 and the port 1. The correspondence indicates that a packet from the user equipment 101 is allowed to be forwarded through the port 1 of SW1. The information about the user equipment 101 includes an IP address and a MAC address that are of the user equipment 101. In some examples, the information about the user equipment 101 may further include lease time of the IP address of the user equipment, and/or an identifier of a VLAN to which the user equipment 101 belongs.

The DHCP snooping entry stored in the communication apparatus SW2 may be understood with reference to Table 1.

**Table 1**

| Port | IP address | MAC address | Lease time | VLAN |
|---|---|---|---|---|
| Port 1 | IP address 1 | MAC address 1 | Lease time 1 | VLAN 1 |

After receiving a packet, the communication apparatus SW2 matches information that is about user equipment and that is carried in the packet with the DHCP snooping table. If the information about the user equipment does not match the DHCP snooping table, the packet is an invalid packet. The communication apparatus SW2 may discard the packet to prevent the packet from attacking a network. For example, if an IP address in the packet received by the communication apparatus SW2 through the port 1 is the IP address 1, but a MAC address is not the MAC address 1, it indicates that the packet may be a packet sent by a network hacker to the communication apparatus SW2 by forging the IP address of the user equipment 101. Therefore, the communication apparatus SW2 may discard the packet. In some examples, if the extracted information about the user equipment and a port receiving the packet completely match the DHCP snooping entry, it indicates that the packet is a valid packet, and therefore, the communication apparatus SW2 may forward the packet. In some other examples, if the extracted information about the user equipment does not match the IP address and the MAC address that are stored in the DHCP snooping entry, and the DHCP snooping table does not store an IP address and a MAC address that are of the user equipment, the communication apparatus SW2 cannot determine whether the packet is an attack packet. In this case, to ensure that a service is not interrupted, the communication apparatus SW2 may forward the packet.

In an example, the communication apparatus SW1 may be a root bridge node of the ring network 100, and the communication apparatus SW6 may also be a root bridge node of the ring network 100. A spanning tree protocol may be deployed in the ring network 100. A root bridge node is a node that advertises configuration information in the spanning tree protocol. When a network topology of the ring network 100 changes, the root bridge node may notify other network nodes.

When both the communication apparatus SW1 and the communication apparatus SW6 are root bridge nodes of the ring network 100, one of the communication apparatus SW1 and the communication apparatus SW6 is a primary root bridge node, and the other is a secondary root bridge node. In addition, in some embodiments, the communication apparatus SW1 used as the root bridge node and the communication apparatus SW6 used as the root bridge node may further form a virtual router redundancy protocol (Virtual Router Redundancy Protocol, VRRP) group.

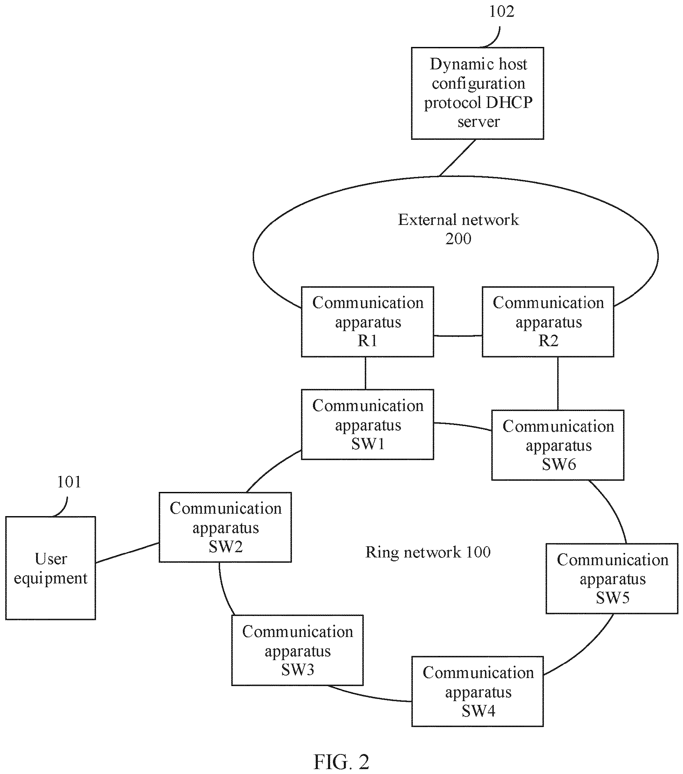

FIG. 2 is a schematic diagram of another example application scenario according to an embodiment of this application.

As shown in FIG. 2, user equipment 101 communicates with a DHCP server 102 via a ring network 100 and an external network 200. A communication apparatus SW1 accesses the external network 200 via a communication apparatus R1, and a communication apparatus SW6 accesses the external network 200 via a communication apparatus R2. In an example, the communication apparatus R1 and the communication apparatus R2 may form a VRRP group. Assuming that the communication apparatus R1 is a primary node of a VRRP group and the communication apparatus R2 is a secondary node in an initial state, the communication apparatus SW1 in the ring network 100 may access the external network 200 via the communication apparatus R1, the communication apparatus R2 is in a snooping state, and the communication apparatus SW6 in the ring network 100 does not access the external network 200 via the communication apparatus R2. If the communication apparatus R1 is faulty, switchover to the communication apparatus R2 as a primary node is performed, and the communication apparatus SW6 in the ring network 100 may access the external network 200 via the communication apparatus R2.

Currently, a DHCP snooping entry maintained by a communication apparatus on which a DHCP snooping function is deployed and that is in the ring network is obtained based on an online packet of user equipment. A communication apparatus that does not transmit an online packet of user equipment does not maintain a DHCP snooping entry corresponding to the user equipment. In some cases, if the DHCP snooping function is not enabled on the communication apparatus that does not transmit the online packet of the user equipment, a network hacker may forge the user equipment to send an attack packet to attack a network. To effectively prevent the foregoing network attack, a possible solution is to enable the DHCP snooping function on all communication interfaces in the ring network. Even so, because some communication apparatuses do not maintain a DHCP snooping entry corresponding to authorized user equipment, if a network hacker forges the authorized user equipment to send a packet to the communication interface that does not maintain the DHCP snooping entry corresponding to the authorized user equipment, the packet is still forwarded in the network. The online packet of the user equipment may be, for example, a packet exchanged between the user equipment and the DHCP server when the user equipment accesses the network (also referred to as "becomes online").

With reference to the scenarios in FIG. 1 and FIG. 2, the following describes the foregoing problem scenarios by using examples.

Example 1: In the scenario shown in FIG. 1, when the user equipment 101 becomes online, the user equipment 101 communicates with the DHCP server 102 through a path 1, and the path 1 includes the communication apparatus SW2 and the communication apparatus SW1. DHCP snooping is enabled on both the port 1 of SW2 and a port 4 of SW1. After the user equipment 101 becomes online, SW2 and SW1 may each store a DHCP snooping entry corresponding to the user equipment 101. Therefore, a packet sent by the authorized user equipment 101 can be authenticated by SW2 and SW1. Therefore, the communication apparatus SW2 and the communication apparatus SW1 each can check a to-be-forwarded packet by using the DHCP snooping entry corresponding to the user equipment 101, to effectively prevent a network hacker from forging the user equipment 101 (for example, forging the IP address of the user equipment 101) to send a packet to the DHCP server 102 and from performing a network attack on the DHCP server 102. As described above, the DHCP snooping entry corresponding to the port on which the DHCP snooping function is deployed is generated based on the online packet of the user equipment. The communication apparatus that does not transmit the online packet of the user equipment does not maintain the DHCP snooping entry corresponding to the user equipment. In some cases, if the DHCP snooping function is not enabled on a receiving port of the communication apparatus, a network hacker may forge the user equipment 101 to send a packet to the DHCP server 102, to perform a network attack on the DHCP server 102. To effectively prevent the foregoing attack, the DHCP snooping function is enabled on all communication interfaces in the ring network. When the path 1 between the communication apparatus SW2 and the communication apparatus SW1 is faulty, the network topology of the ring network 100 changes. The communication apparatus SW1 switches a working path to the path 2 shown in FIG. 1, to transmit the packet sent by the user equipment 101. However, a communication apparatus such as the communication apparatus SW3 on the path 2 does not maintain the DHCP snooping entry corresponding to the user equipment 101. Consequently, if a network hacker forges the user equipment 101 (for example, forges the IP address of the user equipment 101) to send an attack packet to the ring network 100, because the communication apparatus on the path 2 does not maintain the DHCP snooping entry corresponding to the user equipment 101, the attack packet can still be transmitted in the ring network 100.

Example 2: In the scenario shown in FIG. 2, the DHCP snooping function is enabled on the communication apparatus R1. However, it can be learned from the foregoing descriptions of a generation manner of the DHCP snooping entry that, the communication apparatus R1 stores the DHCP snooping entry corresponding to the user equipment 101, but the communication apparatus R2 does not store the DHCP snooping entry corresponding to the user equipment 101. Therefore, even if the DHCP snooping function is enabled on the communication apparatus R2, the communication apparatus R2 still cannot normally identify an attack packet sent by a network hacker that forges the user equipment 101. If the communication apparatus R2 can store the DHCP snooping entry corresponding to the user equipment 101, the communication apparatus R2 can identify the attack packet sent by the network hacker that forges the user equipment 101, so as to prevent the attack packet from being continuously transmitted in the network, and improve network security.

It should be noted that the communication apparatus mentioned in embodiments of this application, for example, the communication apparatus SW1, SW2, SW3, SW4, SW5, SW6, R1, or R2 shown in FIG. 1 and FIG. 2, may be a network device such as a switch or a router, or may be a part of components on the network device, for example, a board or a line card on the network device, or may be a functional module on the network device. This is not specifically limited in embodiments of this application. Communication apparatuses may be directly connected, for example, through an Ethernet cable or an optical cable.

To reduce the foregoing security risk, an embodiment of this application provides an entry information processing method. The following describes the method with reference to the accompanying drawings.

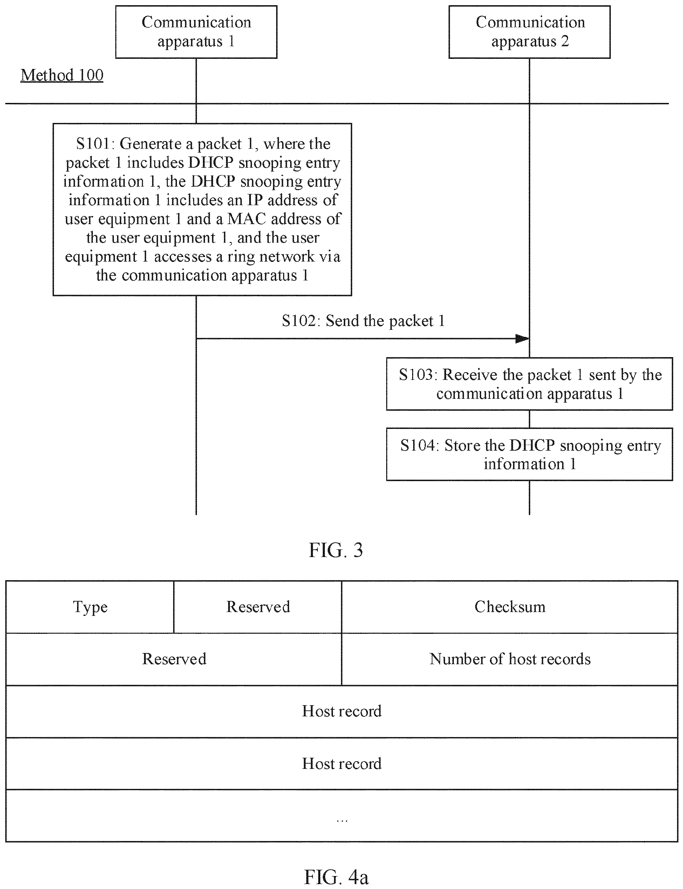

FIG. 3 is a schematic flowchart of an entry information processing method according to an embodiment of this application. The entry information processing method 100 shown in FIG. 3 may be applied to the scenario shown in FIG. 1 or FIG. 2. For example, the method 100 may include the following S101 to S103.

S101: A communication apparatus 1 in a ring network generates a packet 1, where the packet 1 includes DHCP snooping entry information 1, the DHCP snooping entry information 1 includes an IP address of user equipment 1 and a MAC address of the user equipment 1, and the user equipment 1 accesses the ring network via the communication apparatus 1.

The ring network mentioned herein may be, for example, the ring network 100 shown in FIG. 1 or FIG. 2, and the communication apparatus 1 may be any communication apparatus in the ring network. For example, in the scenario shown in FIG. 1 or FIG. 2, the communication apparatus 1 may be the communication apparatus SW2, SW3, SW4, or SW5.

In some embodiments, information about the DHCP snooping entry information 1 may further include lease time of the IP address of the user equipment 1 and/or an identifier of a VLAN to which the user equipment 1 belongs.

In some embodiments, in addition to information about the user equipment 1, the DHCP snooping entry information 1 obtained by the communication apparatus 1 may further include information about other user equipment that accesses the ring network via the communication apparatus 1. This is not specifically limited in embodiments of this application. In an example, the DHCP snooping entry information 1 obtained by the communication apparatus 1 may include information about each piece of user equipment that accesses the ring network via the communication apparatus 1. This is not specifically limited in embodiments of this application. For example, the DHCP snooping entry information 1 obtained by the communication apparatus 1 may further include information about user equipment 2, where the information about the user equipment 2 includes an IP address of the user equipment 2 and a MAC address of the user equipment 2. In some embodiments, the information about the user equipment 2 may further include lease time of the IP address of the user equipment 2, and/or an identifier of a VLAN to which the user equipment 2 belongs.

In embodiments of this application, the packet 1 may be a broadcast packet, or may be a unicast packet or a multicast packet. When the packet 1 is a broadcast packet, the packet 1 is broadcast to a plurality of communication apparatuses. In this way, all the plurality of communication apparatuses may obtain the DHCP snooping entry information 1. When the packet 1 is a unicast packet, the packet 1 may be sent to a specific communication apparatus. Therefore, the specific communication apparatus may obtain the DHCP snooping entry information 1. The communication apparatus 1 may generate a plurality of unicast packets 1, and send the plurality of unicast packets 1 to a plurality of other communication apparatuses in the ring network. Therefore, the plurality of other communication apparatuses in the ring network may obtain the corresponding DHCP snooping entry information 1 from the received packets 1. When the packet 1 is a multicast packet, the packet 1 may be sent to at least one communication apparatus corresponding to a multicast group.

In an example, the packet 1 may include indication information 1, where the indication information 1 indicates a communication node that forwards the packet 1 and that is in the ring network to obtain the DHCP snooping entry information 1 included in the packet 1. In this way, the communication node that forwards the packet 1 and that is in the ring network may obtain the DHCP snooping entry information 1 based on the indication of the indication information 1, and store a DHCP snooping entry including the DHCP snooping entry information 1, so as to check the received packet by using the DHCP snooping entry, and ensure network security.

It may be understood that, when the packet 1 includes the indication information 1, if the packet 1 is a unicast packet, in addition to a destination receiving node of the packet 1, the communication node that forwards the packet 1 and that is in the ring network may also obtain the DHCP snooping entry information 1. In other words, not only the destination receiving node of the packet 1 can check the received packet by using the DHCP snooping entry information 1, but also the communication node that forwards the packet 1 and that is in the ring network can check the received packet by using the DHCP snooping entry information 1, to effectively ensure the network security.

A packet structure of the packet 1 is not specifically limited in embodiments of this application. In an example, the packet 1 may include a first part and a second part. The first part is used to carry at least one piece of DHCP snooping entry information that includes the DHCP snooping entry information 1, and the second part is to indicate a quantity of pieces of DHCP snooping entry information carried in the first part. FIG. 4a is a schematic diagram of a structure of a packet 1 according to an embodiment of this application. As shown in FIG. 4a, the packet 1 may include a type (type) field, a checksum (checksum) field, a host record (host record) field, a number of host records (number of host record) field, and a reserved (reserved) field. The type field indicates a type of the packet 1. In an example, the type field may be used to carry the indication information 1 mentioned above. The checksum field is used to perform integrity check on the packet 1. The host record field may correspond to the foregoing first part, and the packet 1 may include one or more host record fields. In an example, one host record field is used to carry one piece of DHCP snooping entry information. The number of host records field may correspond to the foregoing second part. Certainly, the indication information 1 may alternatively be carried in another field of the packet 1, for example, carried in the reserved field or an extension field of a packet header of the packet 1. This is not specifically limited in embodiments of this application. The packet 1 may be based on DHCP or another protocol. This is not specifically limited in this application.

S102: The communication apparatus 1 sends the packet 1.

S103: A communication apparatus 2 receives the packet 1 sent by the communication apparatus 1.

After receiving the packet 1, the communication apparatus 2 generates a DHCP snooping table that is used to store DHCP snooping entry information corresponding to at least one piece of user equipment that accesses the communication apparatus 1.

In some embodiments, for example, in the scenario shown in FIG. 1, the communication apparatus 1 may send the packet 1 along a path 2 in the ring network. The path 2 is used to transmit a packet from the user equipment 1 when a path 1 in the ring network is faulty. The path 1 and the path 2 are two paths in opposite transmission directions in the ring network. For the path 1 and the path 2, refer to FIG. 1 and the foregoing descriptions of FIG. 1. Details are not described herein again.

By using the method 100, a communication node that the path 2 includes may obtain the DHCP snooping entry information 1 and generate the corresponding DHCP snooping entry. In this way, when the path 1 is faulty, the communication node on the path 2 may also check the received packet by using the corresponding DHCP snooping entry, to effectively ensure network security and ensure a normal service of an authorized user. In an example, when the packet 1 is a broadcast packet, the communication apparatus 2 corresponds to any communication node on the path 2 in the ring network 100. When the packet 1 is a unicast packet, the communication apparatus 1 may send the unicast packet to each communication node that is on the path 2, and the communication apparatus 2 corresponds to a destination node of the packet 1 or any communication node that is on the path 2. When the packet 1 is a multicast packet, all communication nodes on the path 2 may be configured as one multicast group. In this case, the communication apparatus 2 corresponds to one communication node in the multicast group.

In another example, for the ring network, a root bridge node of the ring network is a node that is of the ring network and that interacts with an external network, and a packet forwarded to the external network via the ring network needs to be forwarded via the root bridge node. After the network topology of the ring network changes, a forwarding path of a packet sent by user equipment in the ring network changes. Therefore, a port that is of the root bridge node and that receives the packet also changes. The scenario shown in FIG. 1 is used as an example. It is assumed that before the network topology of the ring network 100 changes, the root bridge node SW1 receives a packet from the user equipment 1 through the port 4, and a DHCP snooping table corresponding to the port 4 includes the foregoing DHCP snooping entry information 1. After the network topology of the ring network 100 changes, the root bridge node SW1 receives a packet from the user equipment 1 by using a port 9. In this case, if a DHCP snooping table corresponding to the port 9 of the root bridge node can include the DHCP snooping entry information 1, after the network topology of the ring network 100 changes, the root bridge node SW1 may also check the received packet by using the corresponding DHCP snooping entry, so as to prevent forwarding a packet sent by a network hacker that forges the user equipment 1 to the external network, to avoid an attack on the DHCP server. Therefore, the communication node on the path 2 may be a root bridge node of the ring network on the path 2. In this case, the packet 1 may be a unicast packet, and the destination receiving node of the packet 1 is a root bridge node of the ring network, for example, the communication apparatus SW1. In this case, the communication apparatus 2 may be a root bridge node of the ring network.

In addition, if the ring network includes a plurality of root bridge nodes, for example, includes two root bridge nodes, the two root bridge nodes may form a VRRP group. In this case, the sending the packet 1 to the root bridge node of the ring network may also be considered as sending the packet 1 to a primary node in the VRRP group. For example, the packet 1 is sent to the root bridge node SW1 used as the primary node. For another example, after the communication apparatus SW6 is upgraded from a secondary node to the primary node, the communication apparatus 1 sends the packet 1 to the communication apparatus SW6.

In some embodiments, the communication apparatus 2 may be a primary node in a VRRP group in the external network. For example, in the scenario shown in FIG. 2, the communication apparatus 1 may send the packet 1 to the primary node in the VRRP group in the external network. The primary node may be a communication node that completes secondary-to-primary switchover. For example, after switchover to the communication apparatus R2 as the primary node is performed, the communication apparatus 1 sends the packet 1 to the communication apparatus R2. The communication apparatus R2 can obtain the corresponding DHCP snooping entry based on the DHCP snooping entry information 1, so as to check the received packet by using the DHCP snooping entry, and effectively prevent a network hacker from forging the user equipment 1 to attack the DHCP server. In a specific example, after switchover to the communication apparatus R2 as the primary node is performed, each communication apparatus in the ring network sends information about user equipment accessed by the communication apparatus to R2. Therefore, R2 may effectively prevent, through DHCP snooping, an attacker from forging the user equipment to perform a network attack.

S104: The communication apparatus 2 stores the DHCP snooping entry information 1.

After receiving the packet 1, the communication apparatus 2 may store the DHCP snooping entry information 1. In an example, the communication apparatus 2 may store the DHCP snooping entry information 1 in the DHCP snooping table of the communication apparatus 2. To further improve performance of DHCP snooping, a user port and an IP address and a MAC address that are of a user may be bound. For example, the communication apparatus 2 may store a correspondence between a port receiving the packet 1 and the DHCP snooping entry information 1 in a DHCP snooping entry of the communication apparatus 2. An example in which the communication apparatus 2 is the communication apparatus SW1 shown in FIG. 1 is used for description. After the communication apparatus 2 receives the packet 1 through the port 9, the DHCP snooping entry obtained after the communication apparatus 2 stores the DHCP snooping entry information 1 includes content shown in Table 2 below.

**Table 2**

| Port | IP address | MAC address | Lease time | VLAN |
|---|---|---|---|---|
| Port 9 | IP address 1 | MAC address 1 | Lease time 1 | VLAN 1 |
| Port 9 | IP address 2 | MAC address 2 | Lease time 2 | VLAN 1 |

In an implementation of this embodiment of this application, the communication apparatus 1 may perform S101 and S 102 before the network topology of the ring network changes, so as to send the DHCP snooping entry information 1 to another communication apparatus. Further, in this way, after the network topology of the ring network changes, even if a packet forwarding path between the user equipment 1 and the DHCP server changes, the another communication apparatus can still check the received packet based on the DHCP snooping entry information 1, to prevent a network hacker from forging the user equipment 1 to attack the DHCP server, and ensure a normal service of an authorized user.

In an implementation of this embodiment of this application, the communication apparatus 1 may alternatively perform S101 and S 102 after the network topology of the ring network changes. This is not specifically limited in this embodiment of this application. If the communication apparatus 1 performs S101 and S 102 after the network topology of the ring network changes, before performing S101, the communication apparatus further needs to determine that the network topology of the ring network changes. In an example, a ring network destruction protocol may be deployed on the communication apparatus 1, and the communication apparatus 1 may determine, by using the ring network destruction protocol, that the network topology of the ring network changes. The ring network destruction protocol may be, for example, a multiple spanning tree protocol (Multiple Spanning Tree Protocol, MSTP). The change of the network topology of the ring network mentioned herein refers to a change of a packet forwarding path in the ring network. For example, as described above, switching is performed from the path 2 in the ring network to the path 1 in the ring network for forwarding the packet sent by the user equipment 1. For the path 2 and the path 1, refer to the foregoing related description part. Details are not described herein again.

In this embodiment of this application, if the packet 1 is a broadcast packet, the communication apparatus 1 may actively send the packet 1. For example, after determining that the network topology of the ring network changes, the communication apparatus 1 actively broadcasts the packet 1 to each communication node on a first path in the ring network. If the packet 1 is a unicast packet, in an example, the communication apparatus 1 may actively send the packet 1 after determining that the network topology of the ring network changes. In another example, the communication apparatus 1 may send the packet 1 to the destination receiving node of the packet 1 based on a request of the destination receiving node of the packet 1. In other words, before performing S101, the communication apparatus 1 may further receive a packet 2, where the packet 2 is used to request the DHCP snooping entry information 1 from the communication apparatus 1. As described above, when the packet 1 is a unicast packet, the destination receiving node of the packet 1 may be the root bridge node of the ring network, or may be the primary node in the VRRP group in the external network. Therefore, the packet 2 mentioned herein may be sent by the root bridge node of the ring network mentioned above to the communication apparatus 1, or may be sent by the primary node in the VRRP group in the external network mentioned above to the communication apparatus 1. In some embodiments, if the packet 2 is sent by the root bridge node of the ring network to the communication apparatus 1, the root bridge node may send the packet 2 to the communication apparatus 1 after the network topology of the ring network changes and the network topology of the ring network tends to be stable. If the packet 2 is sent by the primary node in the VRRP group in the external network to the communication apparatus 1, a node in the VRRP group in the external network may send the packet 2 to the communication apparatus 1 after switchover to the node as the primary node is performed.

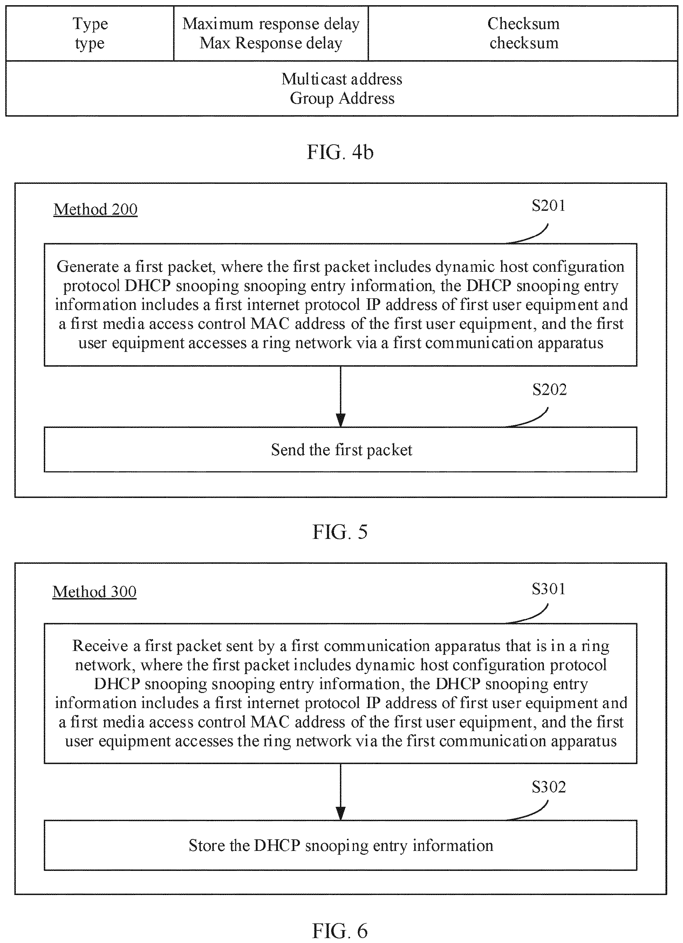

The packet 2 is not specifically limited in embodiments of this application. In an example, the packet 2 may be a multicast packet, and a destination receiving node in the packet 2 is a communication node in the ring network. A packet structure of the packet 2 is not specifically limited in embodiments of this application. In an example, the packet 2 may include a type field, and the type field indicates that the packet 2 is used to request the DHCP snooping entry information 1. FIG. 4b is a schematic diagram of a structure of a packet 2 according to an embodiment of this application. As shown in FIG. 4b, the packet 2 includes a type (type) field, a maximum response delay (Max Response delay) field, a checksum (checksum) field, and a multicast address (Group Address) field. It should be noted that, FIG. 4b is shown for ease of understanding the packet structure of the packet 2, and does not constitute a limitation on the packet structure of the packet 2.

For meanings of the fields in the packet 2, refer to the following Table 3 for understanding.

**Table 3**

| Field | Meaning |
|---|---|
| Type | Indicates that the packet is used to request the DHCP snooping entry information 1 |
| Maximum response delay | Maximum time interval at which a communication apparatus that receives the packet 2 replies to the packet 2 with a response packet |
| checksum | Checksum |
| Multicast Address | Multicast address that is an address selected from reserved multicast addresses and sent to all communication nodes on a network segment |

FIG. 5 is a schematic flowchart of an entry information processing method according to an embodiment of this application. The entry information processing method 200 shown in FIG. 5 may be performed by a first communication apparatus. The first communication apparatus may be the communication apparatus 1 in the foregoing embodiment, and is configured to perform the steps performed by the communication apparatus 1 in the foregoing method 100. For example, the method 200 may include the following S201 and S202.

S201: Generate a first packet, where the first packet includes dynamic host configuration protocol DHCP snooping entry information, the DHCP snooping entry information includes a first internet protocol IP address of first user equipment and a first media access control MAC address of the first user equipment, and the first user equipment accesses a ring network via the first communication apparatus.

S202: Send the first packet.

The first packet mentioned herein may correspond to the packet 1 in the method 100, and the DHCP snooping entry information mentioned herein may correspond to the DHCP snooping entry information 1 in the method 100. The first user equipment mentioned herein may correspond to the user equipment 1 in the method 100.

In an implementation, the generating a first packet includes:
generating the first packet after determining that a topology of the ring network changes.

In an implementation, the DHCP snooping entry information further includes:
an identifier of a virtual local area network VLAN to which the first user equipment belongs, and/or lease time of the first IP address.

In an implementation, the sending the first packet includes:
sending the first packet to a communication node on a first path in the ring network, where the first path is used to transmit a packet from the first user equipment when a second path in the ring network is faulty, and the first path and the second path are two paths in opposite transmission directions in the ring network.

The first path mentioned herein may correspond to the path 2 in the method 100, and the second path mentioned herein may correspond to the path 1 in the method 100.

In an implementation, the communication node includes a root bridge node of the ring network.

In an implementation, the sending the first packet includes:
sending the first packet to a primary node in a virtual router redundancy protocol VRRP group in an external network, where a root bridge node of the ring network accesses the external network via the VRRP group.

In an implementation, the first packet is a broadcast packet.

In an implementation, the first packet is a unicast packet.

In an implementation, before the generating a first packet, the method further includes:
receiving a second packet, where the second packet is used to request the DHCP snooping entry information from the first communication apparatus.

The second packet mentioned herein may correspond to the packet 2 in the method 100.

In an implementation, the receiving a second packet includes:
receiving the second packet sent by the root bridge node of the ring network.

In an implementation, the receiving a second packet includes:
receiving the second packet sent by the primary node in the virtual router redundancy protocol VRRP group in the external network, where the root bridge node of the ring network accesses the external network via the VRRP group.

In an implementation, the first packet further includes indication information, and the indication information indicates the communication node that forwards the first packet and that is in the ring network to obtain the DHCP snooping entry information.

The indication information mentioned herein may correspond to the indication information 1 in the method 100.

In an implementation, the first packet includes:
a first part, used to carry at least one piece of DHCP snooping entry information that includes the DHCP snooping entry information; and
a second part, to indicate a quantity of pieces of DHCP snooping entry information carried in the first part.

In an implementation, the ring network is a layer 2 ring network or a layer 3 ring network.

FIG. 6 is a schematic flowchart of an entry information processing method according to an embodiment of this application. The entry information processing method 300 shown in FIG. 6 may be performed by a second communication apparatus. The second communication apparatus may be the communication apparatus 2 in the foregoing embodiment, and is configured to perform the steps performed by the communication apparatus 2 in the foregoing method 100. In the method 300, a first communication apparatus may correspond to the communication apparatus 1 in the foregoing embodiment. For example, the method 300 may include the following S301 and S302.

S301: Receive a first packet sent by the first communication apparatus that is in a ring network, where the first packet includes dynamic host configuration protocol DHCP snooping entry information, the DHCP snooping entry information includes a first internet protocol IP address of first user equipment and a first media access control MAC address of the first user equipment, and the first user equipment accesses the ring network via the first communication apparatus.

S302: Store the DHCP snooping entry information.

In an example, in this application, the storing the DHCP snooping entry information includes: generating a DHCP snooping table, and storing the DHCP snooping entry information in the DHCP snooping table. In an example, the DHCP snooping table in this application includes a correspondence between a port, an IP address of user equipment, and a MAC address of user equipment. The first packet mentioned herein may correspond to the packet 1 in the method 100. The first user equipment mentioned herein may correspond to the user equipment 1 in the method 100, and the DHCP snooping entry information mentioned herein may correspond to the DHCP snooping entry information 1 in the method 100.

In an implementation, the DHCP snooping entry information further includes:
an identifier of a virtual local area network VLAN to which the first user equipment belongs, and/or lease time of the first IP address.

In an implementation, the second communication apparatus is a communication node on a first path in the ring network, the first path is used to transmit a packet from the first user equipment when a second path in the ring network is faulty, and the first path and the second path are two paths in opposite transmission directions in the ring network.

The first path mentioned herein may correspond to the path 2 in the method 100, and the second path mentioned herein may correspond to the path 1 in the method 100.

In an implementation, the second communication apparatus includes a root bridge node of the ring network.

In an implementation, the second communication apparatus is a primary node in a virtual router redundancy protocol VRRP group in an external network, and the root bridge node of the ring network accesses the external network via the VRRP group.

In an implementation, the first packet is a broadcast packet.

In an implementation, the first packet is a unicast packet.

In an implementation, the method further includes:
sending a second packet to the first communication apparatus, where the second packet is used to request the DHCP snooping entry information from the first communication apparatus.

The second packet mentioned herein may correspond to the packet 2 in the method 100.

In an implementation, the first packet further includes indication information, and the indication information indicates the second communication apparatus to obtain the DHCP snooping entry information.

The indication information mentioned herein may correspond to the indication information 1 in the method 100.

In an implementation, the first packet includes:
a first part, used to carry at least one piece of DHCP snooping entry information that includes the DHCP snooping entry information; and
a second part, to indicate a quantity of pieces of DHCP snooping entry information carried in the first part.

In an implementation, the ring network is a layer 2 ring network or a layer 3 ring network.

In an implementation, the storing the DHCP snooping entry information includes:
storing a correspondence between a port receiving the first packet and the DHCP snooping entry information.

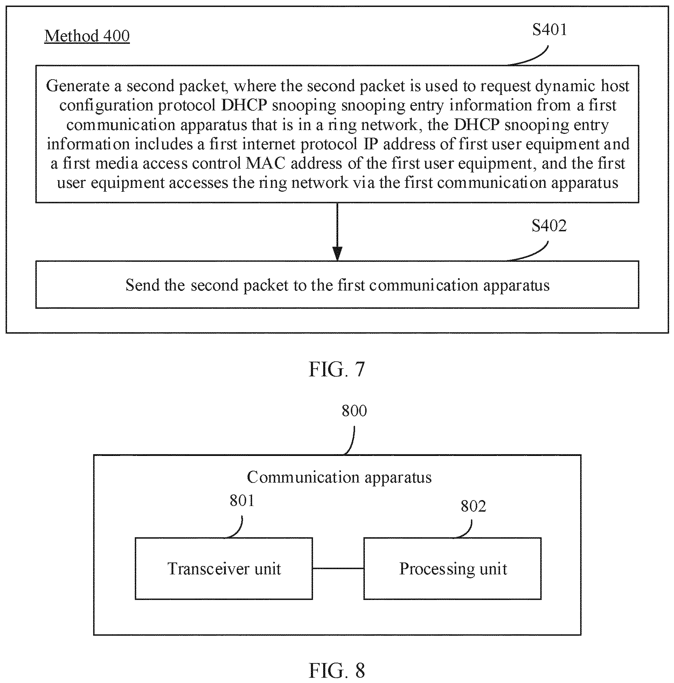

FIG. 7 is a schematic flowchart of an entry information processing method according to an embodiment of this application. The entry information processing method 400 shown in FIG. 7 may be performed by a second communication apparatus. The second communication apparatus may be the communication apparatus 2 in the foregoing embodiment, and is configured to perform the steps performed by the communication apparatus 2 in the foregoing method 100. In the method 400, a first communication apparatus may correspond to the communication apparatus 1 in the foregoing embodiment. For example, the method 400 may include the following S401 and S402.

S401: Generate a second packet, where the second packet is used to request dynamic host configuration protocol DHCP snooping entry information from a first communication apparatus that is in a ring network, the DHCP snooping entry information includes a first internet protocol IP address of first user equipment and a first media access control MAC address of the first user equipment, and the first user equipment accesses a ring network via the first communication apparatus.

S402: Send the second packet to the first communication apparatus.

The second packet mentioned herein may correspond to the packet 2 in the method 100, the DHCP snooping entry information mentioned herein may correspond to the DHCP snooping entry information 1 in the method 100, and the first user equipment mentioned herein may correspond to the user equipment 1 in the method 100.

In an implementation, the method includes:
receiving a first packet sent by the first communication apparatus, where the first packet includes the DHCP snooping entry information; and
storing the DHCP snooping entry information.

The first packet mentioned herein may correspond to the packet 1 in the method 100.

In an implementation, the DHCP snooping entry information further includes:
an identifier of a virtual local area network VLAN to which the first user equipment belongs, and/or lease time of the first IP address.

In an implementation, the second communication apparatus is a communication node on a first path in the ring network, the first path is used to transmit a packet from the first user equipment when a second path in the ring network is faulty, and the first path and the second path are two paths in opposite transmission directions in the ring network.

The first path mentioned herein may correspond to the path 2 in the method 100, and the second path mentioned herein may correspond to the path 1 in the method 100.

In an implementation, the second communication apparatus includes a root bridge node of the ring network.

In an implementation, the second communication apparatus is a primary node in a virtual router redundancy protocol VRRP group in an external network, and the root bridge node of the ring network accesses the external network via the VRRP group.

In an implementation, the first packet is a broadcast packet.

In an implementation, the first packet is a unicast packet.

In an implementation, the first packet further includes indication information, and the indication information indicates the second communication apparatus to obtain the DHCP snooping entry information.

The indication information mentioned herein may correspond to the indication information 1 in the method 100.

In an implementation, the first packet includes:
a first part, used to carry at least one piece of DHCP snooping entry information that includes the DHCP snooping entry information; and
a second part, to indicate a quantity of pieces of DHCP snooping entry information carried in the first part.

In an implementation, the ring network is a layer 2 ring network or a layer 3 ring network.

In an implementation, the storing the DHCP snooping entry information includes:
storing a correspondence between a port receiving the first packet and the DHCP snooping entry information.

For specific implementation of the method 200, the method 300, and the method 400, refer to the foregoing description part of the method 100. Details are not described herein again.

In addition, an embodiment of this application further provides a communication apparatus 800 as shown in FIG. 8. FIG. 8 is a schematic diagram of a structure of a communication apparatus according to an embodiment of this application. The communication apparatus 800 includes a transceiver unit 801 and a processing unit 802. The communication apparatus 800 may be configured to perform the method 100, the method 200, the method 300, or the method 400 in the foregoing embodiment.

In an example, the communication apparatus 800 may perform the method 100 in the foregoing embodiment. When the communication apparatus 800 is configured to perform the method 100 in the foregoing embodiment, the communication apparatus 800 is equivalent to the communication apparatus 1 in the method 100. The transceiver unit 801 is configured to perform receiving and sending operations performed by the communication apparatus 1 in the method 100. The processing unit 802 is configured to perform an operation performed by the communication apparatus 1 in the method 100 other than the receiving and sending operations. For example, the processing unit 802 is configured to generate a packet 1, where the packet 1 includes DHCP snooping entry information 1, the DHCP snooping entry information 1 includes an IP address of user equipment 1 and a MAC address of the user equipment 1, and the user equipment 1 accesses a ring network via the communication apparatus 1. The transceiver unit 801 is configured to send the packet 1.

In an example, the communication apparatus 800 may perform the method 100 in the foregoing embodiment. When the communication apparatus 800 is configured to perform the method 100 in the foregoing embodiment, the communication apparatus 800 is equivalent to the communication apparatus 2 in the method 100. The transceiver unit 801 is configured to perform receiving and sending operations performed by the communication apparatus 2 in the method 100. The processing unit 802 is configured to perform an operation performed by the communication apparatus 2 in the method 100 other than the receiving and sending operations. For example, the transceiver unit 801 is configured to receive a packet 1 sent by a communication apparatus 1, where the packet 1 includes DHCP snooping entry information 1, the DHCP snooping entry information 1 includes an IP address of user equipment 1 and a MAC address of the user equipment 1, and the user equipment 1 accesses a ring network via the communication apparatus 1. The processing unit 802 is configured to store the DHCP snooping entry information 1.

In an example, the communication apparatus 800 may perform the method 100 in the foregoing embodiment. When the communication apparatus 800 is configured to perform the method 100 in the foregoing embodiment, the communication apparatus 800 is equivalent to the communication apparatus 2 in the method 100. The transceiver unit 801 is configured to perform receiving and sending operations performed by the communication apparatus 2 in the method 100. The processing unit 802 is configured to perform an operation performed by the communication apparatus 2 in the method 100 other than the receiving and sending operations. For example, the processing unit 802 is configured to generate a packet 2, where the packet 2 is used to request dynamic host configuration protocol DHCP snooping entry information 1 from a communication apparatus 1 that is in a ring network, the DHCP snooping entry information includes an IP address of user equipment 1 and a MAC address of the user equipment 1, and the user equipment 1 accesses the ring network via the communication apparatus 1. The transceiver unit 801 is configured to send the packet 2 to the communication apparatus 1.

In an example, the communication apparatus 800 may perform the method 200 in the foregoing embodiment. When the communication apparatus 800 is configured to perform the method 200 in the foregoing embodiment, the communication apparatus 800 is equivalent to the first communication apparatus in the method 200. The transceiver unit 801 is configured to perform receiving and sending operations performed by the first communication apparatus in the method 200. The processing unit 802 is configured to perform an operation performed by the first communication apparatus in the method 200 other than the receiving and sending operations. For example, the processing unit 802 is configured to generate a first packet, where the first packet includes dynamic host configuration protocol DHCP snooping entry information, the DHCP snooping entry information includes a first internet protocol IP address of first user equipment and a first media access control MAC address of the first user equipment, and the first user equipment accesses a ring network via the first communication apparatus. The transceiver unit 801 is configured to send the first packet.

In an example, the communication apparatus 800 may perform the method 300 in the foregoing embodiment. When the communication apparatus 800 is configured to perform the method 300 in the foregoing embodiment, the communication apparatus 800 is equivalent to the second communication apparatus in the method 300. The transceiver unit 801 is configured to perform receiving and sending operations performed by the second communication apparatus in the method 300. The processing unit 802 is configured to perform an operation performed by the second communication apparatus in the method 300 other than the receiving and sending operations. For example, the transceiver unit 801 is configured to receive a first packet sent by a first communication apparatus that is in a ring network, where the first packet includes dynamic host configuration protocol DHCP snooping entry information, the DHCP snooping entry information includes a first internet protocol IP address of first user equipment and a first media access control MAC address of the first user equipment, and the first user equipment accesses the ring network via the first communication apparatus. The processing unit 802 is configured to store the DHCP snooping entry information.

In an example, the communication apparatus 800 may perform the method 400 in the foregoing embodiment. When the communication apparatus 800 is configured to perform the method 400 in the foregoing embodiment, the communication apparatus 800 is equivalent to the second communication apparatus in the method 400. The transceiver unit 801 is configured to perform receiving and sending operations performed by the second communication apparatus in the method 400. The processing unit 802 is configured to perform an operation performed by the second communication apparatus in the method 400 other than the receiving and sending operations. For example, the processing unit 802 is configured to generate a second packet, where the second packet is used to request dynamic host configuration protocol DHCP snooping entry information from a first communication apparatus that is in a ring network, the DHCP snooping entry information includes a first internet protocol IP address of first user equipment and a first media access control MAC address of the first user equipment, and the first user equipment accesses the ring network via the first communication apparatus. The transceiver unit 801 is configured to send the second packet to the first communication apparatus.

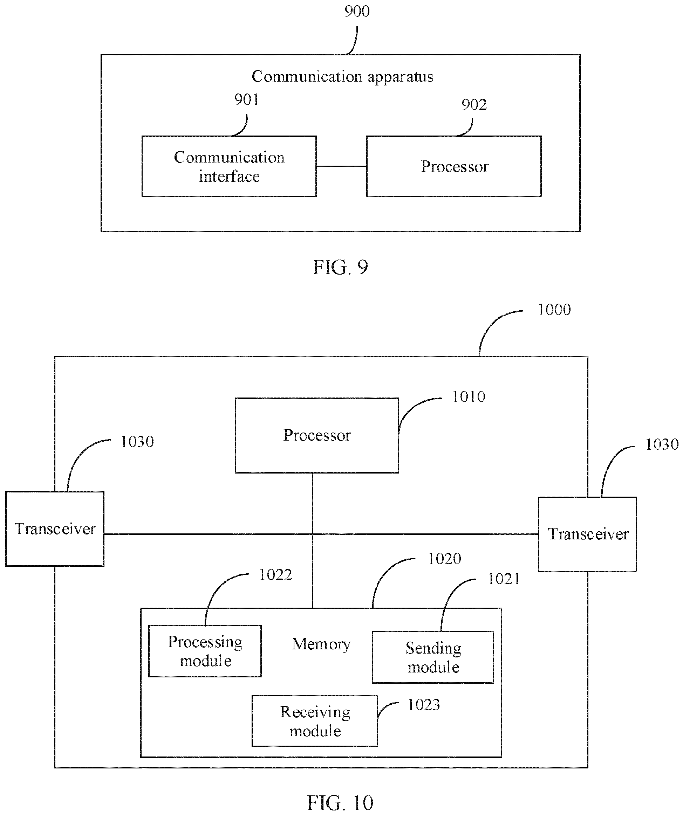

In addition, an embodiment of this application further provides a communication apparatus 900. FIG. 9 is a schematic diagram of a structure of a communication apparatus according to an embodiment of this application. The communication apparatus 900 includes a communication interface 901 and a processor 902 connected to the communication interface 901. The communication apparatus 900 may be configured to perform the method 100, the method 200, the method 300, or the method 400 in the foregoing embodiment.

In an example, the communication apparatus 900 may perform the method 100 in the foregoing embodiment. When the communication apparatus 900 is configured to perform the method 100 in the foregoing embodiment, the communication apparatus 900 is equivalent to the communication apparatus 1 in the method 100. The communication interface 901 is configured to perform receiving and sending operations performed by the communication apparatus 1 in the method 100. The processor 902 is configured to perform an operation performed by the communication apparatus 1 in the method 100 other than the receiving and sending operations. For example, the processor 902 is configured to generate a packet 1, where the packet 1 includes DHCP snooping entry information 1, the DHCP snooping entry information 1 includes an IP address of user equipment 1 and a MAC address of the user equipment 1, and the user equipment 1 accesses a ring network via the communication apparatus 1. The communication interface 901 is configured to send the packet 1.

In an example, the communication apparatus 900 may perform the method 100 in the foregoing embodiment. When the communication apparatus 900 is configured to perform the method 100 in the foregoing embodiment, the communication apparatus 900 is equivalent to the communication apparatus 2 in the method 100. The communication interface 901 is configured to perform receiving and sending operations performed by the communication apparatus 2 in the method 100. The processor 902 is configured to perform an operation performed by the communication apparatus 2 in the method 100 other than the receiving and sending operations. For example, the communication interface 901 is configured to receive a packet 1 sent by a communication apparatus 1, where the packet 1 includes DHCP snooping entry information 1, the DHCP snooping entry information 1 includes an IP address of user equipment 1 and a MAC address of the user equipment 1, and the user equipment 1 accesses a ring network via the communication apparatus 1. The processor 902 is configured to store the DHCP snooping entry information 1.

In an example, the communication apparatus 900 may perform the method 100 in the foregoing embodiment. When the communication apparatus 900 is configured to perform the method 100 in the foregoing embodiment, the communication apparatus 900 is equivalent to the communication apparatus 2 in the method 100. The communication interface 901 is configured to perform receiving and sending operations performed by the communication apparatus 2 in the method 100. The processor 902 is configured to perform an operation performed by the communication apparatus 2 in the method 100 other than the receiving and sending operations. For example, the processor 902 is configured to generate a packet 2, where the packet 2 is used to request dynamic host configuration protocol DHCP snooping entry information 1 from a communication apparatus 1 that is in a ring network, the DHCP snooping entry information includes an IP address of user equipment 1 and a MAC address of the user equipment 1, and the user equipment 1 accesses the ring network via the communication apparatus 1. The communication interface 901 is configured to send the packet 2 to the communication apparatus 1.

In an example, the communication apparatus 900 may perform the method 200 in the foregoing embodiment. When the communication apparatus 900 is configured to perform the method 200 in the foregoing embodiment, the communication apparatus 900 is equivalent to the first communication apparatus in the method 200. The communication interface 901 is configured to perform receiving and sending operations performed by the first communication apparatus in the method 200. The processor 902 is configured to perform an operation performed by the first communication apparatus in the method 200 other than the receiving and sending operations. For example, the processor 902 is configured to generate a first packet, where the first packet includes dynamic host configuration protocol DHCP snooping entry information, the DHCP snooping entry information includes a first internet protocol IP address of first user equipment and a first media access control MAC address of the first user equipment, and the first user equipment accesses a ring network via the first communication apparatus. The communication interface 901 is configured to send the first packet.

In an example, the communication apparatus 900 may perform the method 300 in the foregoing embodiment. When the communication apparatus 900 is configured to perform the method 300 in the foregoing embodiment, the communication apparatus 900 is equivalent to the second communication apparatus in the method 300. The communication interface 901 is configured to perform receiving and sending operations performed by the second communication apparatus in the method 300. The processor 902 is configured to perform an operation performed by the second communication apparatus in the method 300 other than the receiving and sending operations. For example, the communication interface 901 is configured to receive a first packet sent by a first communication apparatus that is in a ring network, where the first packet includes dynamic host configuration protocol DHCP snooping entry information, the DHCP snooping entry information includes a first internet protocol IP address of first user equipment and a first media access control MAC address of the first user equipment, and the first user equipment accesses the ring network via the first communication apparatus. The processor 902 is configured to store the DHCP snooping entry information.

In an example, the communication apparatus 900 may perform the method 400 in the foregoing embodiment. When the communication apparatus 900 is configured to perform the method 400 in the foregoing embodiment, the communication apparatus 900 is equivalent to the second communication apparatus in the method 400. The communication interface 901 is configured to perform receiving and sending operations performed by the second communication apparatus in the method 400. The processor 902 is configured to perform an operation performed by the second communication apparatus in the method 400 other than the receiving and sending operations. For example, the processor 902 is configured to generate a second packet, where the second packet is used to request dynamic host configuration protocol DHCP snooping entry information from a first communication apparatus that is in a ring network, the DHCP snooping entry information includes a first internet protocol IP address of first user equipment and a first media access control MAC address of the first user equipment, and the first user equipment accesses the ring network via the first communication apparatus. The communication interface 901 is configured to send the second packet to the first communication apparatus.

In addition, an embodiment of this application further provides a communication apparatus 1000. FIG. 10 is a schematic diagram of a structure of a communication apparatus according to an embodiment of this application.

The communication apparatus 1000 may be configured to perform the method 100, the method 200, the method 300, or the method 400 in the foregoing embodiment.

As shown in FIG. 10, the communication apparatus 1000 may include a processor 1010, a memory 1020 connected to the processor 1010 in a coupling manner, and a transceiver 1030. The transceiver 1030 may be, for example, a communication interface, an optical module, or the like. The processor 1010 may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array FPGA for short), generic array logic (English: generic array logic, GAL for short), or any combination thereof. The processor 1010 may be one processor, or may include a plurality of processors. The memory 1020 may include a volatile memory (English: volatile memory), for example, a random access memory (English: random access memory, RAM for short); the memory may further include a non-volatile memory (English: non-volatile memory), for example, a read-only memory (English: read-only memory, ROM for short), a flash memory (English: flash memory), a hard disk (English: hard disk, HD for short), or a solid-state drive (English: solid-state drive, SSD for short). The memory 1020 may further include a combination of the foregoing memories. The memory 1020 may be one memory, or may include a plurality of memories. In a specific implementation, the memory 1020 stores computer-readable instructions, and the computer-readable instructions include a plurality of software modules, for example, a sending module 1021, a processing module 1022, and a receiving module 1023. After executing each software module, the processor 1010 may perform a corresponding operation based on an indication of each software module. In this embodiment, an operation performed by a software module is actually the operation performed by the processor 1010 based on the indication of the software module.

In an example, the communication apparatus 1000 may perform the method 100 in the foregoing embodiment. When the communication apparatus 1000 is configured to perform the method 100 in the foregoing embodiment, the communication apparatus 1000 is equivalent to the communication apparatus 1 in the method 100. The transceiver 1030 is configured to perform receiving and sending operations performed by the communication apparatus 1 in the method 100. The processor 1010 is configured to perform an operation performed by the communication apparatus 1 in the method 100 other than the receiving and sending operations. For example, the processor 1010 is configured to generate a packet 1, where the packet 1 includes DHCP snooping entry information 1, the DHCP snooping entry information 1 includes an IP address of user equipment 1 and a MAC address of the user equipment 1, and the user equipment 1 accesses a ring network via the communication apparatus 1. The transceiver 1030 is configured to send the packet 1.

In an example, the communication apparatus 1000 may perform the method 100 in the foregoing embodiment. When the communication apparatus 1000 is configured to perform the method 100 in the foregoing embodiment, the communication apparatus 1000 is equivalent to the communication apparatus 2 in the method 100. The transceiver 1030 is configured to perform receiving and sending operations performed by the communication apparatus 2 in the method 100. The processor 1010 is configured to perform an operation performed by the communication apparatus 2 in the method 100 other than the receiving and sending operations. For example, the transceiver 1030 is configured to receive a packet 1 sent by a communication apparatus 1, where the packet 1 includes DHCP snooping entry information 1, the DHCP snooping entry information 1 includes an IP address of user equipment 1 and a MAC address of the user equipment 1, and the user equipment 1 accesses a ring network via the communication apparatus 1. The processor 1010 is configured to store the DHCP snooping entry information 1.

In an example, the communication apparatus 1000 may perform the method 100 in the foregoing embodiment. When the communication apparatus 1000 is configured to perform the method 100 in the foregoing embodiment, the communication apparatus 1000 is equivalent to the communication apparatus 2 in the method 100. The transceiver 1030 is configured to perform receiving and sending operations performed by the communication apparatus 2 in the method 100. The processor 1010 is configured to perform an operation performed by the communication apparatus 2 in the method 100 other than the receiving and sending operations. For example, the processor 1010 is configured to generate a packet 2, where the packet 2 is used to request dynamic host configuration protocol DHCP snooping entry information 1 from a communication apparatus 1 that is in a ring network, the DHCP snooping entry information includes an IP address of user equipment 1 and a MAC address of the user equipment 1, and the user equipment 1 accesses the ring network via the communication apparatus 1. The transceiver 1030 is configured to send the packet 2 to the communication apparatus 1.

In an example, the communication apparatus 1000 may perform the method 200 in the foregoing embodiment. When the communication apparatus 1000 is configured to perform the method 200 in the foregoing embodiment, the communication apparatus 1000 is equivalent to the first communication apparatus in the method 200. The transceiver 1030 is configured to perform receiving and sending operations performed by the first communication apparatus in the method 200. The processor 1010 is configured to perform an operation performed by the first communication apparatus in the method 200 other than the receiving and sending operations. For example, the processor 1010 is configured to generate a first packet, where the first packet includes dynamic host configuration protocol DHCP snooping entry information, the DHCP snooping entry information includes a first internet protocol IP address of first user equipment and a first media access control MAC address of the first user equipment, and the first user equipment accesses a ring network via the first communication apparatus. The transceiver 1030 is configured to send the first packet.

In an example, the communication apparatus 1000 may perform the method 300 in the foregoing embodiment. When the communication apparatus 1000 is configured to perform the method 300 in the foregoing embodiment, the communication apparatus 1000 is equivalent to the second communication apparatus in the method 300. The transceiver 1030 is configured to perform receiving and sending operations performed by the second communication apparatus in the method 300. The processor 1010 is configured to perform an operation performed by the second communication apparatus in the method 300 other than the receiving and sending operations. For example, the transceiver 1030 is configured to receive a first packet sent by a first communication apparatus that is in a ring network, where the first packet includes dynamic host configuration protocol DHCP snooping entry information, the DHCP snooping entry information includes a first internet protocol IP address of first user equipment and a first media access control MAC address of the first user equipment, and the first user equipment accesses the ring network via the first communication apparatus. The processor 1010 is configured to store the DHCP snooping entry information.

In an example, the communication apparatus 1000 may perform the method 400 in the foregoing embodiment. When the communication apparatus 1000 is configured to perform the method 400 in the foregoing embodiment, the communication apparatus 1000 is equivalent to the second communication apparatus in the method 400. The transceiver 1030 is configured to perform receiving and sending operations performed by the second communication apparatus in the method 400. The processor 1010 is configured to perform an operation performed by the second communication apparatus in the method 400 other than the receiving and sending operations. For example, the processor 1010 is configured to generate a second packet, where the second packet is used to request dynamic host configuration protocol DHCP snooping entry information from a first communication apparatus that is in a ring network, the DHCP snooping entry information includes a first internet protocol IP address of first user equipment and a first media access control MAC address of the first user equipment, and the first user equipment accesses the ring network via the first communication apparatus. The transceiver 1030 is configured to send the second packet to the first communication apparatus.

An embodiment of this application further provides a computer-readable storage medium. The computer-readable storage medium stores instructions. When the instructions are run on a computer, the computer is enabled to perform the steps performed by the first communication apparatus in the foregoing embodiments.

An embodiment of this application further provides a computer-readable storage medium. The computer-readable storage medium stores instructions. When the instructions are run on a computer, the computer is enabled to perform the steps performed by the second communication apparatus in the foregoing embodiments.

An embodiment of this application further provides a communication system, including any first communication apparatus and any second communication apparatus mentioned in the foregoing embodiments.

An embodiment of this application further provides a communication system, including at least one memory and at least one processor. The at least one memory stores instructions, and the at least one processor executes the instructions, so that the communication system performs any one or more operations in the method (for example, the method 100, the method 200, or the method 300) in any one of the foregoing embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, division into units is merely logical service division and may be another division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, technical solutions of this application essentially, or a part contributing to a conventional technology or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

A person skilled in the art should be aware that, in the foregoing one or more examples, services described in the present invention may be implemented by hardware, software, firmware, or any combination thereof. When the present invention is implemented by the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention.

The foregoing embodiments are merely intended for describing the technical solutions of this application instead of limiting this application. Although this application is described in detail with reference to the foregoing embodiments, it should understand that a person of ordinary skill in the art may still make modifications to the technical solutions recorded in the foregoing embodiments or make equivalent replacements to a part of technical features thereof. These modifications or replacements do not make the essence of the corresponding technical solutions depart from the scope of the technical solutions in embodiments of this application.

## Claims

1. An entry information processing method, performed by a first communication apparatus that is in a ring network, wherein the method comprises:
generating a first packet, wherein the first packet comprises dynamic host configuration protocol DHCP snooping entry information, the DHCP snooping entry information comprises a first internet protocol IP address of first user equipment and a first media access control MAC address of the first user equipment, and the first user equipment accesses the ring network via the first communication apparatus; and
sending the first packet.

2. The method according to claim 1, wherein the sending the first packet comprises:
generating the first packet after determining that a topology of the ring network changes.

3. The method according to claim 1 or 2, wherein the sending the first packet comprises:
sending the first packet to a communication node on a first path in the ring network, wherein the first path is used to transmit a packet from the first user equipment when a second path in the ring network is faulty, and the first path and the second path are two paths in opposite transmission directions in the ring network.

4. The method according to claim 3, wherein the communication node comprises a root bridge node of the ring network.

5. The method according to claim 1 or 2, wherein the sending the first packet comprises:
sending the first packet to a primary node in a virtual router redundancy protocol VRRP group in an external network, wherein a root bridge node of the ring network accesses the external network via the VRRP group.

6. The method according to any one of claims 1 to 5, wherein before the generating a first packet, the method further comprises:
receiving a second packet, wherein the second packet is used to request the DHCP snooping entry information from the first communication apparatus.

7. The method according to claim 6, wherein the receiving a second packet comprises:
receiving the second packet sent by the root bridge node of the ring network.

8. The method according to claim 6, wherein the receiving a second packet comprises:
receiving the second packet sent by the primary node in the virtual router redundancy protocol VRRP group in the external network, wherein the root bridge node of the ring network accesses the external network via the VRRP group.

9. An entry information processing method, performed by a second communication apparatus, wherein the method comprises:
receiving a first packet sent by a first communication apparatus that is in a ring network, wherein the first packet comprises dynamic host configuration protocol DHCP snooping entry information, the DHCP snooping entry information comprises a first internet protocol IP address of first user equipment and a first media access control MAC address of the first user equipment, and the first user equipment accesses the ring network via the first communication apparatus; and
storing the DHCP snooping entry information.

10. The method according to claim 9, wherein the second communication apparatus is a communication node on a first path in the ring network, the first path is used to transmit a packet from the first user equipment when a second path in the ring network is faulty, and the first path and the second path are two paths in opposite transmission directions in the ring network.

11. The method according to claim 10, wherein the second communication apparatus comprises a root bridge node of the ring network.

12. The method according to claim 9, wherein the second communication apparatus is a primary node in a virtual router redundancy protocol VRRP group in an external network, and a root bridge node of the ring network accesses the external network via the VRRP group.

13. The method according to any one of claims 9 to 12, wherein the method further comprises:
sending a second packet to the first communication apparatus, wherein the second packet is used to request the DHCP snooping entry information from the first communication apparatus.

14. The method according to any one of claims 9 to 13, wherein the storing the DHCP snooping entry information comprises:
storing a correspondence between a port receiving the first packet and the DHCP snooping entry information.

15. The method according to any one of claims 1 to 14, wherein the DHCP snooping entry information further comprises:
an identifier of a virtual local area network VLAN to which the first user equipment belongs, and/or lease time of the first IP address.

16. The method according to any one of claims 1 to 14, wherein the first packet is a broadcast packet or a unicast packet.

17. The method according to any one of claims 1 to 16, wherein the first packet further comprises indication information, and the indication information indicates the communication node that forwards the first packet and that is in the ring network to obtain the DHCP snooping entry information.

18. The method according to any one of claims 1 to 17, wherein the first packet comprises:
a first part, used to carry at least one piece of DHCP snooping entry information that comprises the DHCP snooping entry information; and
a second part, to indicate a quantity of pieces of DHCP snooping entry information carried in the first part.

19. The method according to any one of claims 1 to 18, wherein the ring network is a layer 2 ring network or a layer 3 ring network.

20. An entry information processing method, performed by a second communication apparatus, wherein the method comprises:
generating a second packet, wherein the second packet is used to request dynamic host configuration protocol DHCP snooping entry information from a first communication apparatus that is in a ring network, the DHCP snooping entry information comprises a first internet protocol IP address of first user equipment and a first media access control MAC address of the first user equipment, and the first user equipment accesses the ring network via the first communication apparatus; and
sending the second packet to the first communication apparatus.

21. A first communication apparatus, wherein the first communication apparatus comprises a memory and a processor,
the memory is configured to store program code; and
the processor is configured to run instructions in the program code, to enable the first communication apparatus to perform the method according to any one of claims 1 to 8 or any one of claims 15 to 19.

22. A second communication apparatus, wherein the second communication apparatus comprises a memory and a processor,
the memory is configured to store program code; and
the processor is configured to run instructions in the program code, to enable the second communication apparatus to perform the method according to any one of claims 9 to 20.

23. A computer-readable storage medium, wherein the computer-readable storage medium stores instructions; and when the instructions are run on a computer, the computer is enabled to perform the method according to any one of claims 1 to 20.

24. A communication system, comprising the first communication apparatus according to claim 21 and the second communication apparatus according to claim 22.

25. An entry information processing apparatus, used in a first communication apparatus that is in a ring network, wherein the apparatus comprises:
a processing unit, configured to generate a first packet, wherein the first packet comprises dynamic host configuration protocol DHCP snooping entry information, the DHCP snooping entry information comprises a first internet protocol IP address of first user equipment and a first media access control MAC address of the first user equipment, and the first user equipment accesses the ring network via the first communication apparatus; and
a sending unit, configured to send the first packet.

26. The apparatus according to claim 25, wherein the processing unit is configured to:
generate the first packet after determining that a topology of the ring network changes.

27. The apparatus according to claim 25 or 26, wherein the sending unit is configured to:
send the first packet to a communication node on a first path in the ring network, wherein the first path is used to transmit a packet from the first user equipment when a second path in the ring network is faulty, and the first path and the second path are two paths in opposite transmission directions in the ring network.

28. The apparatus according to claim 27, wherein the communication node comprises a root bridge node of the ring network.

29. The apparatus according to claim 25 or 26, wherein the sending unit is configured to:
send the first packet to a primary node in a virtual router redundancy protocol VRRP group in an external network, wherein a root bridge node of the ring network accesses the external network via the VRRP group.

30. The apparatus according to any one of claims 25 to 29, wherein the apparatus further comprises:
a receiving unit, configured to receive a second packet before the first packet is generated, wherein the second packet is used to request the DHCP snooping entry information from the first communication apparatus.

31. The apparatus according to claim 30, wherein the receiving unit is configured to:
receive the second packet sent by the root bridge node of the ring network.

32. The apparatus according to claim 30, wherein the receiving unit is configured to:
receive the second packet sent by the primary node in the virtual router redundancy protocol VRRP group in the external network, wherein the root bridge node of the ring network accesses the external network via the VRRP group.

33. An entry information processing apparatus, used in a second communication apparatus, wherein the apparatus comprises:
a receiving unit, configured to receive a first packet sent by a first communication apparatus that is in a ring network, wherein the first packet comprises dynamic host configuration protocol DHCP snooping entry information, the DHCP snooping entry information comprises a first internet protocol IP address of first user equipment and a first media access control MAC address of the first user equipment, and the first user equipment accesses the ring network via the first communication apparatus; and
a storing unit, configured to store the DHCP snooping entry information.

34. The apparatus according to claim 33, wherein the second communication apparatus is a communication node on a first path in the ring network, the first path is used to transmit a packet from the first user equipment when a second path in the ring network is faulty, and the first path and the second path are two paths in opposite transmission directions in the ring network.

35. The apparatus according to claim 34, wherein the second communication apparatus comprises a root bridge node of the ring network.

36. The apparatus according to claim 33, wherein the second communication apparatus is a primary node in a virtual router redundancy protocol VRRP group in an external network, and a root bridge node of the ring network accesses the external network via the VRRP group.

37. The apparatus according to any one of claims 33 to 36, wherein the apparatus further comprises:
a sending unit, configured to send a second packet to the first communication apparatus, wherein the second packet is used to request the DHCP snooping entry information from the first communication apparatus.

38. The apparatus according to any one of claims 33 to 37, wherein the storing unit is configured to:
store a correspondence between a port receiving the first packet and the DHCP snooping entry information.

39. The apparatus according to any one of claims 25 to 38, wherein the DHCP snooping entry information further comprises:
an identifier of a virtual local area network VLAN to which the first user equipment belongs, and/or lease time of the first IP address.

40. The apparatus according to any one of claims 25 to 39, wherein the first packet is a broadcast packet or a unicast packet.

41. The apparatus according to any one of claims 25 to 40, wherein the first packet further comprises indication information, and the indication information indicates the communication node that forwards the first packet and that is in the ring network to obtain the DHCP snooping entry information.

42. The apparatus according to any one of claims 25 to 41, wherein the first packet comprises:
a first part, used to carry at least one piece of DHCP snooping entry information that comprises the DHCP snooping entry information; and
a second part, to indicate a quantity of pieces of DHCP snooping entry information carried in the first part.

43. The apparatus according to any one of claims 25 to 42, wherein the ring network is a layer 2 ring network or a layer 3 ring network.

44. An entry information processing apparatus, used in a second communication apparatus, wherein the apparatus comprises:
a processing unit, configured to generate a second packet, wherein the second packet is used to request dynamic host configuration protocol DHCP snooping entry information from a first communication apparatus that is in a ring network, the DHCP snooping entry information comprises a first internet protocol IP address of first user equipment and a first media access control MAC address of the first user equipment, and the first user equipment accesses the ring network via the first communication apparatus; and
a sending unit, configured to send the second packet to the first communication apparatus.

45. A computer program product comprising instructions or a computer program, wherein when the computer program product runs on a computer, the computer is enabled to perform the method according to any one of claims 1 to 20.
